# EUROPEAN PATENT APPLICATION

(11) **EP 2 348 454 A1**
(43) Date of publication of application: **27.07.2011**
(21) Application number: 10305061.3
(22) Date of filing: 20.01.2010
(51) Int. Cl.: G06F 21/22, G06F 21/20, G06F 21/24

(54) **A method of and a system for execution of a software application**

(71) Applicant: Thomson Licensing, 92130 Issy-les-Moulineaux (FR)
(72) Inventor: Maetz, Yves, 92443, Issy les Moulineaux cedex (FR); Eluard, Marc, 92443, Issy les Moulineaux cedex (FR)
(74) Representative: Ruellan-Lemonnier, Brigitte

(57) **Abstract**

A method of and a system for execution of a software application. A storage medium (120) stores the software application (1221) in a first memory (122). The software application (1221) comprises code that, when executed by a computing device (110) authenticates the storage medium (120). The storage medium (120) verifies (230) an integrity of the software application (1221) and transfers (240) the software application (1221) to the computing device (110) upon successful verification. The computing device (110) executes the software application (1221), which authenticates (250) the storage medium (120). If the storage medium (120) is successfully authenticated, the computing device (110) accesses (260) data in a second memory (123; 124) of the storage medium (120), the data being susceptible to be used by the software application (1221) during execution.

## Description

### TECHNICAL FIELD

The present invention relates generally to software, and in particular to software copy protection.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

It will come as no surprise that software distributors are facing piracy in the sense that some people are using unauthorized copies of the software applications without paying for them. This is particularly true in the domain of computer games. Game providers and distributors therefore use protection mechanisms such as e.g. SecuROM and SafeMedia in an attempt to thwart such piracy. However, hackers have reacted by developing tools that at least partly defeat these protection mechanisms.

It is possible that the distribution of software applications may change as support technology changes. For example, U3 is a technology dedicated to Universal Serial Bus (USB) keys; it facilitates the management of applications residing in the USB key flash memory storage area. The next generation of USB protocol will have much greater transfer rate than the current generation, possibly being even faster than transfer from a hard disk drive.

The SanDisk TrustedFlash technology enables some security features - such as authentication, encryption, session key and DRM (Digital Rights Management) rights management - on flash memories. However, this technology is mainly oriented towards the protection of generic data than software applications, and it is more of a technology toolbox than a solution to a precise problem.

A recent protection scheme provided by Thomson fights application piracy through the use of tamper resistant hardware bound to the application support. WO 2008/129009 describes a media package storing program code. The media package comprises a medium storing a first part of the program code intended to be executed on a processor external to the media package, and a processing device storing a state and a second part of the program code. The first and the second parts of the program code are adapted to interact so as to execute the program code. The processing device comprises means for verifying the state, means for executing the second part of the program code if the verification of the state indicates that this is authorised, and means for communication with the processor external to the media package. The processing device further comprises an interface adapted to interact with a state change device, advantageously belonging to an anti-theft system in e.g. a supermarket, in order to set the state from a first state not authorising execution of second part of the program code to a second state authorising execution of second part of the program code.

WO 2009/074686 describes a cartridge for use with a game console. The cartridge comprises a ROM, a non-volatile memory, a processor and a dispatcher. An application running on the console may communicate with the dispatcher using predefined addresses, which enables the dispatcher to access the ROM, the non-volatile memory, or the processor, as the case may be. The invention improves on the prior art copy protection as no generic copy method may be found if the addresses are changed from one cartridge to another. In addition, to copy the software, the processor must be emulated.

The solution proposed is based on the use of a secure element fixed on an optical disc (or other media), the secure element being accessed through contactless communication means. A drawback is that such solution requires the use of a dedicated optical reader with integrated contactless reader.

To overcome this drawback, it is possible to separate the media and the secure element. However, this would entail some important usability drawbacks, especially when being used careless by teenagers and kids, as it for example would be too easy to lose one or the other.

Furthermore, secure elements are generally costly, so system designers try to minimize the amount of "secure memory". Therefore the secure element can only store a limited amount of data, generally strictly related to security. This may prevent the storage therein of user configuration data, e.g. avatar 3D models. This may therefore limit the use of the application to a single computer, since the application related data - device configuration, application settings, scores - are stored on the computer's hard disk.

EP 1076279 teaches a different solution where a computer comprises a trusted module that functions as a generic dongle for the platform. The dongle can perform licensing and integrity checks etc. However, the solution is not at all portable and it only applies to computers comprising the trusted module.

It can therefore be appreciated that there is a need for a solution that provides a software application protection scheme that enables portability of the application, in particular to standard, non-specialized, platforms. This invention provides such a solution.

### SUMMARY OF INVENTION

In a first aspect, the invention is directed to a method of execution of a software application. A storage medium stores, in a first memory, the software application comprising code that, when executed by a computing device authenticates the storage medium. The storage medium verifies an integrity of the software application. If the integrity is successfully verified, then the storage medium transfers the software application to the computing device where it is executed, thereby authenticating the storage medium.

In a first preferred embodiment, if the storage medium is successfully authenticated, the computing device requests data in a second memory of the storage medium, the data being susceptible to be used by the software application during execution.

In a second preferred embodiment, the computing device verifies that it recognizes the storage medium.

In a third preferred embodiment, the authentication step further establishes a Secure Authenticated Channel between the computing device and the storage medium.

In a second aspect, the invention is directed to a system for execution of a software application. The system comprises a computing device and a storage medium. The storage medium comprises a first memory for storing the software application that comprises code, which, when executed by the computing device authenticates the storage medium; and a processor for transferring the software application to the computing device only if the integrity is successfully verified; and verifying an integrity of the software application. The execution device comprises a processor for executing the software application in order to authenticate the storage medium.

In a first preferred embodiment, the storage medium further comprises a second memory for storing data susceptible to be used by the software application during execution. The processor of the storage medium is for allowing the processor of the computing device access to the data in the second memory, and the processor of the computing device executes the software application in order to request, upon successful authentication, access to data in the second memory of the storage medium.

In a second preferred embodiment, the processor of the computing device is further for verifying that it recognizes the storage medium.

In a third preferred embodiment, the processor of the computing device and the processor of the storage medium are further adapted to establish a Secure Authenticated Channel during authentication.

In a third aspect, the invention is directed to a storage medium comprising: a first memory for storing a software application, the software application comprising code that, when executed by a computing device authenticates the storage medium; a second memory for storing data that is susceptible to be used by the software application during execution; and a processor for transferring the software application to the computing device only if the integrity is successfully verified; verifying an integrity of the software application; and allowing the processor of the computing device access to the data in the second memory.

### BRIEF DESCRIPTION OF DRAWINGS

Preferred features of the present invention will now be described, by way of non-limiting example, with reference to the accompanying drawings, in which
Figure 1 illustrates a system according to a preferred embodiment of the invention; and
Figure 2 illustrates a method of interaction between a secure device according to a preferred embodiment of the invention and a computer.

### DESCRIPTION OF EMBODIMENTS

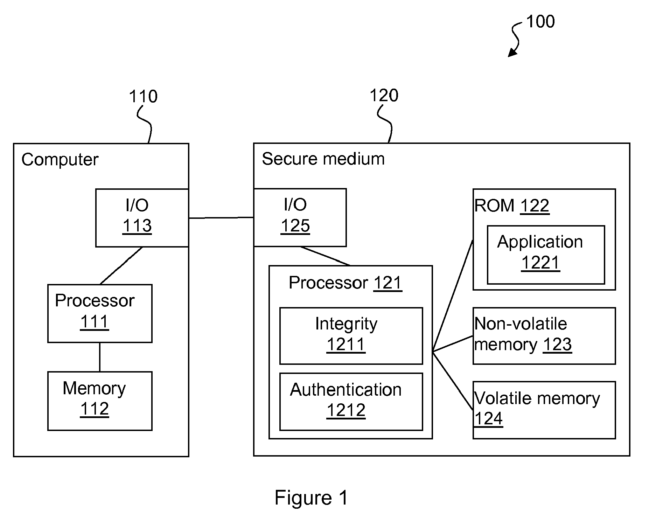

A main inventive idea of the present invention is a medium for the distribution of a computer application (hereinafter 'application'), in particular computer games, that does not require any permanent installation on the computer. The solution, which is illustrated in Figure 1, is particularly adapted to today's nomadic environments.

Figure 1 illustrates a system 100 comprising a computer 110 and a secure medium 120 of the present invention. The secure medium 120, which is preferably implemented as a USB key or other USB device implementing the U3 technology, comprises:
- a read-only memory (ROM) 122 for storing the application code 1221.
- a non-volatile memory 123, preferably a flash memory, for storing persistent initialization data and personal data, such as for example data relating to a user's character in a game.
- a secure processor 121, preferably implemented in tamper resistant hardware (such as a smartcard chip), which is the unique entry point to the secure medium 120. The secure processor 121, which may be embodied as several physical processors, handles memory access and comprises an integrity unit 1211 for controlling the integrity of the application code 1211 and an authentication unit 1212 for handling authentication with the application when this is executed on the computer 110.
- an interface 125, preferably a USB interface, for providing control and feedback with the computer 110.
- an optional volatile memory 124 for storing data that will be deleted automatically on power off. The volatile memory 124 may be used as additional temporary storage for the secure processor 121 and as secure temporary storage for the application.

The computer 110, advantageously a standard Personal Computer (PC), comprises a processor 111, RAM memory 112 and an interface 113 for communication with the secure medium 120. The operating system of the computer 110 and its applications are loaded into the RAM memory 112 and run from there.

The secure medium 120 is arranged to be recognized as a standard storage equipment when it is connected to the interface 113 of the computer 110.

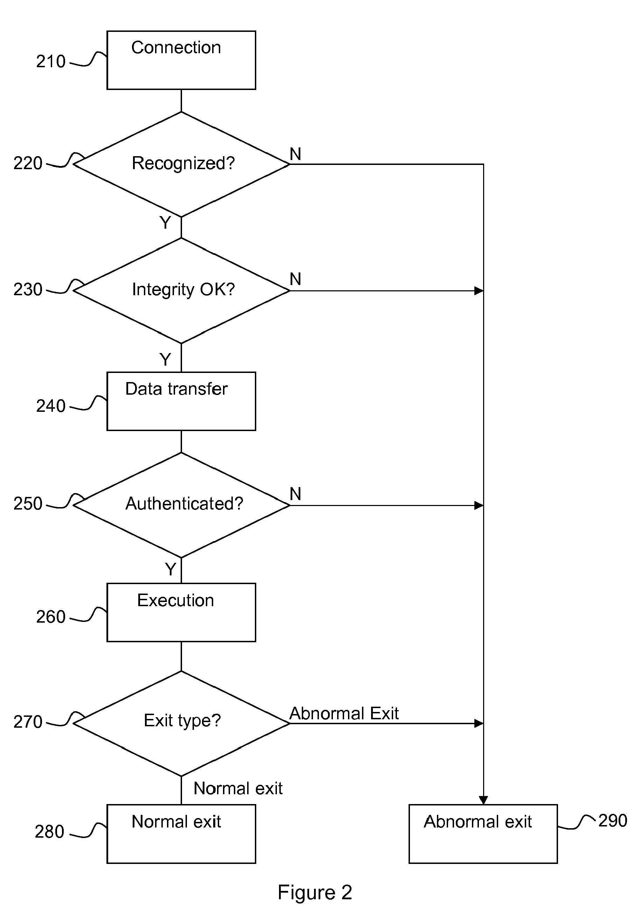

Figure 2 illustrates a method of interaction between the secure device 120 and the computer 110. The secure device 120 is first connected 210 to the computer 110. If the secure device 120 is not recognized 220 by the computer, the method ends with an abnormal exit 290: the secure processor 121 and the computer 110 cannot communicate.

If the secure device 120 is recognized, then the secure processor 121 verifies 230 the integrity of the application code 1221. The verification check is made by the integrity unit 1211 of the secure processor 121, for example by calculating a hash value and comparing the calculated hash value and a stored hash value, preferably hard coded during manufacturing, or by calculating a checksum that is compared with a reference value. If the integrity check fails, the method ends with an abnormal exit 290: the secure processor 121 refuses further communication with the computer 110 and the application code 1221 is not uploaded to the computer 110. On the other hand, if the integrity check is successful, the application code 1221 is transferred 240 to the computer 110 where it is copied into the RAM memory 112 resulting in the application being loaded.

In brief, the application code 1221 stored in the ROM 122 is verified for integrity and transferred to the computer RAM memory 112.

The application is then executed by the processor 112. During the execution, the application performs authentication 250 with the secure processor 121. The authentication is performed using an authentication function and data in the application that interacts with the authentication unit 1212 and authentication data of the secure processor 121. Any suitable prior art authentication protocol, preferably one that establishes a Secure Authenticated Channel (SAC), may be used, for example the one described in granted US patent 7545932. The authentication function and data in the application are preferably protected, for example through the use of prior art software protection techniques.

If the authentication check fails, the method ends with an abnormal exit 290: the secure processor 121 refuses any further communication with the computer 110 and the application will halt.

If the authentication succeeds, the application is executed 260 and it is able to access, through requests to the secure processor 121, the volatile memory 124 and the non-volatile memory 123, the data being returned by the secure processor 121.

When the execution of the application ends, the method performs a normal exit 280 (i.e. 'normal exit' in step 270 'Exit type?'), as the application asks the secure processor 121 to close any pending actions, after which the application clears itself from the RAM memory 112. If it hasn't been done already, the application transfers relevant application parameters, such as data relating to a user's character in a game, for storage in the non-volatile memory 123. The secure processor 112 then preferably nullifies and shuts down the volatile memory 124, and invalidates all authentication credentials.

If the secure medium 120 is removed abnormally during the execution of the application (i.e. 'abnormal exit' in step 270 'Exit type?'), this is an abnormal exit 290. In this case, the data in the volatile memory 124 will be lost. At the next connection (or power-on), the secure processor 121 starts by rolling back any pending actions (e.g. memory access) and invalidates any previous authentication. After this phase, the secure device 120 restarts normally, i.e. the connection corresponds to step 210 of the method. The secure medium 120 does not accept any communication with a previously loaded application until a new complete transfer process 240 is done. The application can no longer interact correctly with the secure medium 120 if the latter is no more present or has been reconnected (as the authentication is invalid). In this case, the application should clear itself from the RAM memory 112 and exit.

It will be appreciated that the present invention implements a copy protection mechanism for computer applications that:
- can ensure the integrity of the application stored in the secure device;
- is non-intrusive with regard to the computer: no additional hardware or software is required;
- is particularly adapted to nomadic environments, allowing portability of the application and user data between different computers.

The system is resistant to at least the following major attacks:
- software attack on the interface: the secure device does not offer direct access (read, write, list) to its memories. The secure processor will not implement this kind of interface.
- hardware attack on the secure device: by definition the secure processor cannot be duplicated or modified. However, without further hardware protection, the memories of the secure device may be dumped and copied. Countermeasures for such attacks exist but are out of scope of the invention. However here is a glimpse of potential countermeasures:
   o A dump of the read-only memory can allow reverse-engineering of the application code, which could be used to modify the application in order to bypass the use of the secure processor. A classical countermeasure is to use software protection techniques.
   o A dump of the other volatile and non-volatile memories can allow access to private application data. A classical countermeasure is the use of data encryption, preferably enforced by the secure processor.

It will be appreciated that the present invention provides a device for copy protection for software application that enables portability of the software application and associated user data.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of execution of a software application, a storage medium (120) storing the software application (1221) in a first memory (122), the software application (1221) comprising code that, when executed by a computing device (110) authenticates the storage medium (120), the method comprising the steps of:
- verifying (230), by the storage medium (120), an integrity of the software application (1221);
if the integrity is successfully verified:
- transferring (240), by the storage medium (120), the software application (1221) to the computing device (110);
- executing, by the computing device (110), the software application (1221); and
- authenticating (250), by the computing device (110), using the software application (1221), the storage medium (120).

2. The method of claim 1 further comprising the step of, if the storage medium (120) is successfully authenticated, requesting, by the computing device (110), data in a second memory (123; 124) of the storage medium (120), the data being susceptible to be used by the software application (1221) during execution.

3. The method of claim 1, further comprising the step of:
- verifying (220), by the computing device (110), that it recognizes the storage medium (120).

4. The method of claim 1, wherein the authentication step further establishes a Secure Authenticated Channel between the computing device (110) and the storage medium (120).

5. A system (100) for execution of a software application, the system (100) comprising a computing device (110) and a storage medium (120):
the storage medium (120) comprising:
a first memory (122) for storing the software application (1221), the software application (1221) comprising code that, when executed by the computing device (110) authenticates the storage medium (120); and
a processor (121) for transferring the software application (1221) to the computing device (110) only if the integrity is successfully verified; and verifying an integrity of the software application (1221); and
the computing device (110) comprising a processor (111) for:
- executing the software application (1221) in order to:
- authenticate the storage medium (120).

6. The system of claim 5, wherein the storage medium (120) further comprises a second memory (123; 124) for storing data that is susceptible to be used by the software application (1221) during execution, and wherein the processor (121) of the storage medium (120) is further for allowing the processor (111) of the computing device (110) access to the data in the second memory (123; 124), and wherein the processor (111) of the computing device (110) further executes the software application (1221) in order to request, upon successful authentication, access to data in the second memory (123; 124) of the storage medium (120)

7. The system of claim 5, wherein the processor (111) of the computing device (110) is further for verifying that it recognizes the storage medium (120).

8. The system of claim 5, wherein the processor (111) of the computing device (110) and the processor (121) of the storage medium (120) are further adapted to establish a Secure Authenticated Channel during authentication.

9. A storage medium (120) comprising:
a first memory (122) for storing a software application (1221), the software application (1221) comprising code that, when executed by a computing device (110) authenticates the storage medium (120);
a second memory (123; 124) for storing data that is susceptible to be used by the software application (1221) during execution; and
a processor (121) for transferring the software application (1221) to the computing device (110) only if the integrity is successfully verified; verifying an integrity of the software application (1221); and allowing the processor (111) of the computing device (110) access to the data in the second memory (123; 124).
